# EUROPEAN PATENT SPECIFICATION

(11) **EP 0 314 256 B1**
(45) Date of publication and mention of the grant of the patent: **18.10.1995**
(21) Application number: 88202423.5
(22) Date of filing: 28.10.1988
(51) Int. Cl.: C08G 81/02, C08C 19/30, C08C 19/44

(54) **Method for preparing asymmetric radial copolymers**
Verfahren zur Herstellung von radialen, asymmetrischen Copolymeren
Méthode de préparation de copolymères radiaux asymétriques

(30) Priority: 30.10.1987 US 115686
(43) Date of publication of application: 03.05.1989
(73) Proprietor: SHELL INTERNATIONALE RESEARCH MAATSCHAPPIJ B.V., 2596 HR Den Haag (NL)
(72) Inventor: Hoxmeier, Ronald James, Houston Texas 77082 (US)

(56) References cited:
- US-A- 4 391 949
- MACROMOLECULES. vol. 21, no. 4, April 1988, EASTON US pages 1094 - 1099; R.W. PENNISI ET AL.: 'PREPARATION OF ASYMMETRIC THREE-ARM POLYBUTADIENE AND POLYSTYRENE STARS '

## Description

This invention relates to a method for preparing polymers. More particularly, this invention relates to a method for preparing asymmetric radial polymers.

Heretofore, several methods have been proposed for preparing asymmetric radial polymers. As is well known in the prior art, radial polymers comprise three or more arms extending outwardly from a nucleus. The asymmetric radial polymers, generally, contain arms of at least two different polymers, which polymers may vary as to chemical composition, structure and/or molecular weights. Asymmetric radial polymers having arms of different molecular weight are sometimes referred to as polymodal polymers. A principal difference in the methods frequently used to prepare both asymmetric and polymodal radial polymers resides in the selection of a coupling agent which forms the nucleus of the radial polymer. The coupling agent may contain a fixed, though sometimes variable, number of functional sites such as the coupling agents taught in U.S. Patent Nos. 3,281,383; 3,598,884; 3,639,517; 3,646,161; 3,993,613 and 4,086,298 or the coupling agent may itself be a monomer which polymerizes during the coupling reaction such as taught in U.S. Patent No. 3,985,830.

In general, and when an asymmetric polymer is prepared using one of the methods heretofore proposed, a blend of polymeric arms is first prepared containing the various polymeric arms in the desired ratio and the blend of polymeric arms is then added to the coupling agent or the coupling agent is added to the blend of polymeric arms. These methods do, then, result in the production of a product having, on average, the desired number of each kind of arm in the asymmetric polymer. The real problem associated with producing asymmetric polymers in this fashion, however, is that the product obtained is in actuality a statistical distribution of all possible products. For example, if one sought to produce an asymmetric radial polymer having three homopolymer arms and one copolymer arm using silicon tetrachloride as the coupling agent by the methods heretofore proposed, a blend of polymeric arms comprising both living homopolymers and living copolymers in a ratio of three to one would be combined with the silicon tetrachloride and the coupling reaction allowed to proceed to completion. The resulting asymmetric polymer would, of course, on average contain three homopolymer arms per copolymer arm. The actual product obtained would, however, be a blend of radial polymers, some of which contain four homopolymer arms and no copolymer arms, some of which contain three homopolymer arms and one copolymer arm (the desired product), some of which contain two homopolymer arms and two copolymer arms, some of which contain one homopolymer arm and three copolymer arms and some of which contain no homopolymer arms and four copolymer arms. To the extent that an asymmetric radial copolymer containing three homopolymer arms and one copolymer arm was particularly well suited for a particular end use application while radial polymers containing less than three homopolymer arms were not particularly well suited, the blend actually obtained would not perform as well as might be desired in this particular end use application.

It has been discovered that narrower distributions of relative arm content in any given asymmetric radial polymer frequently does, indeed, lead to better performance in many end use applications. The need for an improved process for preparing asymmetric radial polymers offering a better control of the relative distribution of polymer arms in the product is believed to be readily apparent.

It is therefore an object of this invention to provide an improved process for preparing asymmetric radial polymers. It is another object of this invention to provide such an improved process wherein the relative distribution of arms within the polymer is controlled within a narrower range. It is yet another object of this invention to provide such an improved process wherein the production of asymmetric radial polymers having relative arm distributions which are not beneficial in any given end use application are either eliminated or at least significantly reduced.

As a result of research and experimentation, it has surprisingly been found that the foregoing and other objects and advantages are accomplished with a process wherein the different arms to be contained in the asymmetric radial polymer are contacted sequentially with the coupling agent.

More particularly, the reaction product of a first polymer, intended, on average, to provide the greatest number of arms and having a single reactive end group with a coupling agent containing a plurality of functional groups which will react with the reactive end group, the amount of said first polymer being substantially stoichiometrically corresponding with a part of the total amount of the functional groups, is subsequently contacted in subsequent steps with one or more polymers, being different from said first polymer and from each other, intended to provide the next greatest number of arms and having a reactive end group, with the reaction product from each preceding step until all functional groups have finally completely reacted, under the proviso that when two or more arms are intended to be present in equal number, each of these arms may be added in any sequence.

It will of course be appreciated that the polymer intended to provide the greater number of arms in the asymmetric polymer product could be a mixture of different polymers. After reaction of the arms intended to be present in the greatest number with the coupling agent is complete or at least substantially complete, the product therefrom will be contacted with the arm intended to be present in the next greatest number and this reaction allowed to proceed until completed or at least substantially completed. When two or more arms are intended to be present in equal number, the order of contacting with the coupling agent is not critical and each of the arms may be added in any order (sequence).

In general, the method of this invention may be used to prepare asymmetric radial polymers with any polymer containing a reactive end group which will react with one or more functional groups contained in a selected coupling agent. The method is particularly suitable for the preparation of asymmetric radial polymers from so-called "living" polymers containing a single terminal metal ion. The coupling agent used in the preparation must, then, contain at least three functional groups which will react with the polymer at the site of the metal ion. As is well known in the prior art, "living" polymers are polymers containing at least one active group such as a metal atom bonded directly to a carbon atom. "Living" polymers are readily prepared via anionic polymerization. Since the present invention is particularly well suited to the preparation of asymmetric radial polymers using "living" polymers to form the arms thereof, the invention will be described by reference to such polymers. It will, however, be appreciated that the invention would be equally useful with polymers having different reactive groups so long as the selected coupling agent contains functional groups which are reactive with the reactive site contained in the polymer.

Living polymers containing a single terminal group are, of course, well known in the prior art. Methods for preparing such polymers are taught, for example, in U.S. Patent Nos. 3,150,209; 3,496,154; 3,498,960; 4,145,298 and 4,238,202. Methods for preparing block copolymers such as those preferred for use in the method of the present invention are also taught, for example, in U.S. Patent Nos. 3,231,635; 3,265,765 and 3,322,856. In general, the polymers produced with the processes taught in the foregoing patents may be polymers of one or more conjugated dienes containing from 4 to 12 carbon atoms such as 1,3-butadiene, isoprene, piperylene, methylpentyldiene, phenylbutadiene, 3,4-dimethyl-1,3-hexadiene, 4,5-diethyl-1,3-octadiene, preferably those conjugated diolefins containing 4 to 8 carbon atoms. In accordance with the disclosure of at least certain of these patents, one or more of the hydrogen atoms in the conjugated diolefins may be substituted with halogen. The polymers produced by these processes may also be copolymers of one or more of the aforementioned conjugated diolefins and one or more other monomers particularly monoalkenyl aromatic hydrocarbon monomers such as styrene, various alkyl-substituted styrenes, alkoxy-substituted styrenes, vinyl naphthalene, vinyl toluene. Homopolymers and copolymers of monoalkenyl aromatic hydrocarbons can also be prepared by the methods taught in the aforementioned patents, particularly the methods taught in U.S. Patent Nos. 3,150,209; 3,496,154; 3,498,960; 4,145,298 and 4,238,202. When the polymer product is a random or tapered copolymer, the monomers are, generally, added at the same time, although the faster reacting monomer may be added slowly in some cases, while, when the product is a block copolymer, the monomer used to form the separate blocks are added sequentially.

In general, the polymers useful as arms in both the method of this invention and the asymmetric radial polymer of this invention may be prepared by contacting the monomer or monomers with an organoalkali metal compound in a suitable solvent at a temperature within the range from -150 °C to 300 °C, preferably at a temperature within the range from 0 °C to 100 °C. Particularly effective polymerization initiators are organolithium compounds having the general formula:

RLi

wherein R is an aliphatic, cycloaliphatic, alkyl-substituted cycloaliphatic, aromatic or alkyl-substituted aromatic hydrocarbon radical having from 1 to 20 carbon atoms.

In general, the polymers useful as arms in both the method of this invention and the asymmetric radial polymer of this invention will have a weight-average molecular weight within the range from 1000 to 500,000 and when the polymer is a copolymer of one or more conjugated diolefins and one or more other monomers, the copolymer will comprise from 1 %wt to 99 %wt monomeric diolefin units and from 99 %wt to 1 %wt monoalkenyl aromatic hydrocarbon monomer units. In general, the different polymer arms will be prepared separately and maintained separately until each is sequentially contacted with the coupling agent.

In general, any of the coupling agents known in the prior art to be useful in forming a radial polymer by contacting the same with a living polymer may be used in both the method of this invention and the asymmetric radial polymers of this invention. In general, suitable coupling agents will contain three or more functional groups which will react with the living polymer at the metal-carbon bond. While the method of the present invention will, theoretically, at least, improve the relative distribution of different arms in an asymmetric radial polymer having any number of arms, the method offers significant improvement when the coupling agent contains from three to twelve functional groups reactive with the metal-carbon bond of the "living" polymer. Suitable coupling agents, then, include SiX₄, RSiX₃, HSiX₃, X₃Si-SiX₃, X₃Si-O-SiX₃, X₃Si-(CH₂)ₓ-SiX₃, R-C(SiX₃)₃, R-C(CH₂SiX₃)₃, C(CH₂SiX₃)₄ particularly those containing from three to six functional groups. In the foregoing formulae: each X may, independently, be fluorine, chlorine, bromine, iodine, alkoxide radicals, carboxylate radicals, hydride; R is a hydrocarbyl radical having from 1 to 10 carbon atoms, preferably from 1 to 6 carbon atoms; and x is a whole number from 1 to 6. Particularly useful coupling agents include the silicon tetrahalides such as silicon tetrafluoride, silicon tetrachloride, silicon tetrabromide.

In general, the living polymers used as arms in the asymmetric radial polymer will be contacted with the coupling agent at a temperature within the range from 0 °C to 100 °C at a pressure within the range from 0 bar to 7 bar and the contacting in each step will be maintained until reaction between the arms and the coupling agent is complete or at least substantially complete, generally for a period of time within the range from 1 to 180 minutes. While the inventor does not wish to be bound by any particular theory, it is believed that the method of this invention results in an improved relative arm distribution because the reactivity of the functional groups contained in the coupling agent become progressively less active as the number of functional groups contained in the coupling agent is reduced as the result of reaction with the metal-carbon bond contained in the living polymer. Further, it is believed that this reduction in activity is caused primarily by steric hindrance resulting from the progressive incorporation of polymer segments onto the coupling agent. The last functional site remaining on the coupling agent would be the least reactive no matter how many functional groups the coupling agent initially contained. As a result, when only a portion of the total number of arms to be contained in the asymmetric radial polymer is initially contacted with the coupling agent, the arms would have readier access to the more reactive functional groups and would react predominantly at these groups. Similarly, the next portion of arms contacted with the partially reacted coupling agent would again be more likely to react with the more reactive of the remaining functional groups until such time as all of the functional groups were reacted. This difference in reactivity when coupled with sequential addition of the different arms greatly enhances the probability that each asymmetric radial polymer formed will have the desired number of each arm. The method of the present invention is particularly useful for the production of an asymmetric polymer wherein a single arm of a particular polymer is desired. This arm would be contacted last and would then react with the least reactive of the functional groups in the coupling agent. When all of the polymer arms are combined and contacted simultaneously with the coupling agent, on the other hand, the distribution of the different arms on each of the asymmetric radial polymers formed will be random and can range from polymers having all arms of one type of polymer to all arms of another type of polymer.

In general, the polymers useful as arms in the asymmetric radial polymers of this invention will be in solution when contacted with the coupling agent. Suitable solvents include those useful in the solution polymerization of the polymer and include aliphatic, cycloaliphatic, alkyl-substituted cycloaliphatic, aromatic and alkyl-substituted aromatic hydrocarbons, ethers and mixtures thereof. Suitable solvents, then, include aliphatic hydrocarbons such as butane, pentane, hexane, heptane, cycloaliphatic hydrocarbons such as cyclohexane, cycloheptane, alkyl-substituted cycloaliphatic hydrocarbons such as methylcyclohexane, methylcycloheptane, aromatic hydrocarbons such as benzene and alkyl-substituted aromatic hydrocarbons such as toluene, xylene and ethers such as tetrahydrofuran₁ diethylether, di-n-butyl ether. Since the polymers useful in making the asymmetric radial polymers of this invention will contain a single terminal reactive group, the polymers used in preparation of the asymmetric radial polymers will be retained in solution after preparation without deactivating the reactive (living) site. In general, the coupling agent may be added to a solution of the polymer or a solution of the polymer may be added to the coupling agent.

The normal method of preparing the asymmetric radial polymers of this invention will comprise a plurality of steps. In the first step, a polymer containing a single terminal reactive group will be contacted with a coupling agent containing a plurality of functional groups which are reactive with the terminal group of the polymer. After initial contacting, the polymer and coupling agent will continue to be contacted for a sufficient period of time to permit complete or at least substantially complete reaction of the coupling agent with the polymer. In a second step, the reaction product from the first step will be combined with a solution of a second polymer which is different from the polymer used in the first step. The difference may be in chemical composition, relative chemical composition, structure, molecular weight. In the second step, contacting between the second polymer and the reaction product from the first step will be continued until reaction between the second polymer and the remaining functional groups of the coupling agent is complete or at least substantially complete. In all except the last step of the preparation, it will be important to control the amount of polymer contacted with the coupling agent such that, on average, the desired number of such arms are incorporated into the nucleus of each of the asymmetric radial polymers actually formed. In the final step, careful control of the amount of polymer used is not as important so long as a sufficient amount of polymer to react with all of the remaining functional groups in the coupling agent is used. To the extent that the polymer used is not readily separable from the asymmetric radial polymer, however, and to the extent that the presence of such a polymer in the final product is undesirable, care should be exercised to ensure that a stoichiometric amount of the last polymer, relative to the remaining functional groups, is used.

The asymmetric radial polymers of this invention containing at least 50% of asymmetric radial molecules, having the desired ratio of polymeric arms therein, may be used in any of the applications for which asymmetric radial polymers having the same average relative arm structure can be used. Suitable end use applications, then, include impact modification of engineering thermoplastics, impact modification of unsaturated thermosetting polyesters, adhesives.

In a preferred embodiment of the present invention, the process of this invention will be used to prepare an asymmetric radial polymer having four arms. The arms will be, partly, polymers containing only conjugated diolefins, most preferably conjugated diolefin homopolymers and, partly, block copolymers containing at least one monoalkenyl aromatic hydrocarbon polymer block and at least one conjugated diolefin polymer block. In a most preferred embodiment, the block copolymer will comprise a single polystyrene block and a single polybutadiene or polyisoprene block. The weight-average molecular weight of those polymeric arms containing only polymerized conjugated diolefins will be within the range from 15,000 to 150,000. The weight-average molecular weight of the monoalkenyl aromatic hydrocarbon polymer blocks will be within the range from 5,000 to 100,000 and the weight-average molecular weight of the conjugated diolefin polymer blocks will be within the range from 15,000 to 150,000. Both the conjugated diolefin polymer arms and the block copolymer arms will be living polymers containing a single lithium atom bonded to a terminal carbon atom. In the preferred embodiment, the ratio of arms containing only conjugated diolefin monomer units to block copolymer arms will be within the range from 3:1 to 1:3. In the preferred embodiment, any of the known coupling agents containing four functional groups which are reactive with the lithium-carbon bond may be used. In a most preferred embodiment, the coupling agent will be silicon tetrachloride. In a most preferred embodiment of the present invention, the ratio of conjugated diolefin homopolymer arms to the styrene-butadiene or styrene-isoprene block copolymer arms will be 3:1.

In the preferred embodiment, and when the asymmetric radial polymer is intended to contain an average of three of one type of polymer arms to one of the other, the polymer intended to constitute the three arms will be contacted with the coupling agent first and the reaction between the lithium-carbon bond and the functional groups allowed to proceed either to completion or at least to substantial completion. When the polymer is intended to contain two of both kinds of arms, either polymer may be first contacted with the coupling agent. In the preferred embodiment, the sequential coupling reactions will be completed at a temperature within the range from 50 °C to 80 °C, at a pressure within the range from 0 bar to 2 bar with a nominal holding time within the range from 20 to 100 minutes. Stoichiometric quantities of all reactants will be used in each step.

Having thus broadly described the present invention and a preferred and most preferred embodiment thereof, it is believed that the invention will become even more apparent by reference to the following examples. It will be appreciated, however, that the examples are presented solely for purposes of illustration and should not be construed as limiting the invention.

### EXAMPLE

In this example, an asymmetric radial polymer within the scope of the present invention containing, on average, three homopolymer arms and one block copolymer arm was prepared. The homopolymer arm was a polybutadiene having a weight-average molecular weight of 44,800. The block copolymer was a block copolymer comprising a single polystyrene block having a weight-average molecular weight of 18,000 and a single polybutadiene block having a weight-average molecular weight of 41,600. In the first step of the preparation, a sufficient amount of a living polybutadiene polymer to provide three moles of living polymer per mole of silicon tetrachloride was contacted with silicon tetrachloride at a temperature of 60 °C and at ambient pressure. The living polymer was dissolved in cyclohexane at a concentration of 12 %wt of polybutadiene and the contacting was accomplished by adding the silicon tetrachloride to the polymer solution. The contacting was maintained for 30 minutes with mild agitation. After reaction of the living polybutadiene polymer and the silicon tetrachloride was complete, a sufficient amount of a living styrene-butadiene block copolymer was added to the solution to provide one mole of block copolymer per mole of silicon tetrachloride initially in solution. Contacting between the block copolymer and the reaction product from the first step was continued for 30 minutes at the same conditions used during the first contacting step. After reaction of the block copolymer and the coupling agent was completed, the asymmetric radial polymer was recovered and analyzed to determine the relative amount of polymer containing no homopolymer arms, one homopolymer arm, two homopolymer arms, three homopolymer arms and four homopolymer arms. The results obtained are summarized in the Table following the next example.

### COMPARATIVE EXAMPLE

In this example, an asymmetric radial polymer having, on average, three homopolymer arms and one block copolymer arm was prepared using conventional techniques. Particularly, the asymmetric radial polymer was prepared by first preparing a solution containing three moles of living polybutadiene per mole of living styrene-butadiene block copolymer. The polybutadiene and the styrene-butadiene block copolymer used in preparing the asymmetric radial polymer in this example were identical to that used in the Example. After the polymer solution was prepared, a sufficient amount of silicon tetrachloride was added to the solution to provide the stoichiometric amount required for complete reaction of the silicon tetrachloride with the living polymer. Contacting with the coupling agent was accomplished at 70 °C and at ambient pressure with mild agitation. Contacting was continued for 100 minutes. After the coupling reaction was completed, the asymmetric radial polymer was recovered and analyzed to determine the amount of polymer containing no homopolymer arms, one homopolymer arm, two homopolymer arms, three homopolymer arms and four homopolymer arms using the same method as was used in the previous example. The results obtained in this example are summarized in the following Table:

**TABLE**

| Number of Homopolymer Arms | % of Polymer having number of Homopolymer Arms Indicated | |
|---|---|---|
| | Method of this Invention | Prior Art Method |
| 0 | 0 | <1 |
| 1 | 0 | 5 |
| 2 | 5 | 21 |
| 3 | 86 | 42 |
| 4 | 9 | 32 |

As will be apparent from the data summarized in the preceding Table, the method of this invention more than doubled the amount of polymer produced having the desired ratio of arms; viz., three homopolymer arms and one copolymer arm (86% vs. 42%). As will also be apparent from the data summarized in the preceding Table, the method of this invention resulted in a product containing only 5% of polymer molecules having two or more copolymer arms while the prior art method resulted in a product containing greater than 26% of polymer molecules having two or more copolymer arms. It is important, particularly in some impact modification end uses, that polymers containing two or more copolymer arms be minimized. The method of the present invention is quite effective in narrowing the relative distribution of the arms in the asymmetric radial polymer produced.

## Claims

1. A method for preparing an asymmetric radial polymer comprising the steps of:
(a) contacting a first polymer, intended, on average to provide the greatest number of arms and having a single reactive end group with a coupling agent containing a plurality of functional groups which will react with the reactive end group, the amount of said first polymer being substantially stoichiometrically corresponding with a part of the total amount of the functional groups, in such a way that the reaction between said first polymer and coupling agent proceeds substantially to completion;
(b) contacting in subsequent steps one or more polymers, being different from said first polymer and from each other intended to provide the next greatest number of arms and having a reactive end group, with the respective reaction product from each preceding step until all functional groups of the coupling agent have finally completely reacted, under the proviso that when two or more arms are intended to be present in equal number, each of these arms may be added in any sequence; and
(c) recovering the obtained asymmetric radial polymer.

2. A method of claim 1 comprising the steps of:
(a) contacting a first polymer, intended, on average, to provide the greatest number of arms and having a single reactive end group with a coupling agent containing a plurality of functional groups which will react with the reactive end group the amount of said first polymer being substantially stoichiometrically corresponding with a part of the total amount of the functional groups, such that reaction between said first polymer and the coupling agent proceeds substantially to completion;
(b) contacting a second polymer, which second polymer is different from said first polymer intended to provide the next greatest number of arms, having a reactive end group with the reaction product from step (a) under conditions such that reaction between said second polymer and the reaction product from step (a) proceeds substantially to completion under the proviso that when two or more arms are intended to be present in equal number, each of these arms may be added in any sequence; and
(c) recovering an asymmetric radial polymer.

3. The method of claims 1 and 2, wherein the coupling agent comprises from three to twelve functional groups.

4. The method of claims 1-3, wherein said coupling agent contains four functional groups.

5. The method of claims 1-4, wherein said coupling agent is silicon tetrachloride.

6. The method of claims 1-5, wherein the polymers used to form the arms are polymers containing only polymerized conjugated diolefins and block copolymers comprising at least one monoalkenyl aromatic hydrocarbon polymer block and at least one conjugated diolefin block.

7. The method of claims 1-6, wherein the ratio of conjugated diolefin arms to block copolymer arms is within the range from 1:3 to 3:1.

8. The method of claims 1-7, wherein said conjugated diolefin arms are a homopolymer of a conjugated diolefin selected from the group consisting of butadiene and isoprene, said monoalkenyl aromatic hydrocarbon is styrene and the conjugated diolefin block is a homopolymer of a conjugated diolefin selected from the group consisting of butadiene and isoprene.

9. The method of claims 1-8, wherein said first polymer is a living polybutadiene and said second polymer is a polystyrene block and at least one polyisoprene block.

10. An asymmetric radial polymer containing at least 50 wt% of asymmetric radial molecules having the desired ratio of polymeric arms therein, obtainable by a process comprising the steps of:
(a) contacting a first polymer, intended, on average, to provide the greatest number of arms and having a single reactive end group with a coupling agent containing a plurality of functional groups which will react with the reactive end group, the amount of said first polymer being substantially stoichiometrically corresponding with a part of the total amount of the functional groups, such that the reaction between said first polymer and coupling agent proceeds substantially to completion;
(b) contacting in subsequent steps one or more polymers being different from said first polymer and from each other intended to provide the next greatest number of arms and having a reactive end group, with the reaction product from each preceding step, until all functional groups of the coupling agent have substantially completely reacted, under the proviso that when two or more arms are intended to be present in equal number, each of these arms may be added in any sequence; and
(c) recovering the obtained asymmetric radial polymer.

11. An asymmetric radial polymer according to claim 10, obtainable by a method comprising the steps of:
(a) contacting a first polymer, intended, on average, to provide the greatest number of arms and having a single reactive end group with a coupling agent containing a plurality of functional groups which will react with the reactive end group, the amount of said first polymer being substantially stoichiometrically corresponding with a part of the total amount of the functional groups, such that reaction between the polymer and coupling agent proceeds substantially to completion;
(b) contacting a second polymer, which second polymer is different from said first polymer, intended to provide the greatest number of arms and having a reactive end group, with the reaction product from step (a) under conditions such that reaction between said second polymer and the reaction product from step (a) proceeds substantially to completion, under the proviso that when two or more arms are intended to be present in equal number, each of these arms may be added in any sequence; and
(c) recovering an asymmetric radial polymer.

12. The asymmetric radial polymer of claims 10 and 11, obtainable by the use of a coupling agent, comprising from three to twelve functional groups.

13. The asymmetric radial polymer of claims 10-12, obtainable by the use of a coupling agent containing four functional groups.

14. The asymmetric radial polymer of claims 10-13, obtainable by the use of silicon tetrachloride.

15. The asymmetric radial polymer of claims 10-14, obtainable by the use of arm forming polymers containing only polymerized conjugated diolefins and block copolymers comprising at least one monoalkenyl aromatic hydrocarbon polymer block and at least one conjugated diolefin block.

16. The asymmetric radial polymer of claims 10-15, wherein the ratio of conjugated diolefin arms to block copolymer arms is within the range from 1:3 to 3:1.

17. The asymmetric radial polymer of claims 10-16, wherein said conjugated diolefin arms are a homopolymer of a conjugated diolefin selected from the group consisting of butadiene and styrene, said monoalkenyl aromatic hydrocarbon is styrene and the conjugated diolefin block is a homopolymer of a conjugated diolefin selected from the group consisting of butadiene and isoprene.

18. The asymmetric radial polymer of claims 10-17, obtainable by the use of the polymer in step (a) a living polybutadiene and as the polymer used in step (b) a block copolymer comprising at least one polystyrene block and at least one polybutadiene block.

19. The asymmetric radial polymer of claims 10-18, obtainable by the use of a homopolymer of isoprene as first polymer and a block copolymer comprising at least one polystyrene block and at least one polyisoprene block as second polymer.

## Patentansprüche

1. Verfahren zur Herstellung eines asymmetrischen, radialen Polymers, das folgende Schritte umfaßt:
(a) Kontaktierung eines ersten Polymers, das im Durchschnitt die größte Zahl an Armen ergeben soll und eine einzige reaktionsfähige Endgruppe aufweist, mit einem Kupplungsmittel mit mehreren funktionellen Gruppen, die mit der reaktionsfähigen Endgruppe reagieren, wobei die Menge dieses ersten Polymers einem Teil der Gesamtmenge an funktionellen Gruppen im wesentlichen stöchiometrisch äquivalent ist, auf solch eine Weise, daß die Reaktion zwischen dem ersten Polymer und dem Kupplungsmittel im wesentlichen zu Ende geführt wird,
(b) Kontaktierung in Folgeschritten eines oder mehrerer Polymere, die sich von dem ersten Polymer und voneinander unterscheiden und die zweitgrößte Zahl an Armen ergeben sollen und eine reaktionsfähige Endgruppe aufweisen, mit dem jeweiligen Reaktionsprodukt aus jedem der vorhergehenden Schritte, bis sich alle funktionellen Gruppen des Kupplungsmittels schließlich vollständig umgesetzt haben, mit der Maßgabe, daß, wenn zwei oder mehr Arme in gleicher Zahl vorliegen sollen, diese Arme jeweils in beliebiger Reihenfolge zugegeben werden können, und
(c) Isolierung des erhaltenen asymmetrischen, radialen Polymers.

2. Verfahren nach Anspruch 1, das folgende Schritte umfaßt:
(a) Kontaktierung eines ersten Polymers, das im Durchschnitt die größte Zahl an Armen ergeben soll und eine einzige reaktionsfähige Endgruppe aufweist, mit einem Kupplungsmittel mit mehreren funktionellen Gruppen, die mit der reaktionsfähigen Endgruppe reagieren, wobei die Menge dieses ersten Polymers einem Teil der Gesamtmenge an funktionellen Gruppen im wesentlichen stöchiometrisch äquivalent ist, auf solch eine Weise, daß die Reaktion zwischen dem ersten Polymer und dem Kupplungsmittel im wesentlichen zu Ende geführt wird,
(b) Kontaktierung eines zweiten Polymers, das sich von dem ersten Polymer unterscheidet und die zweitgrößte Zahl von Armen ergeben soll und eine reaktionsfähige Endgruppe aufweist, mit dem Reaktionsprodukt aus Schritt (a) unter solchen Bedingungen, daß die Reaktion zwischen dem zweiten Polymer und dem Reaktionsprodukt aus Schritt (a) im wesentlichen zu Ende geführt wird, mit der Maßgabe, daß, wenn zwei oder mehr Arme in gleicher Zahl vorliegen sollen, diese Arme jeweils in beliebiger Reihenfolge zugegeben werden können, und
(c) Isolierung eines asymmetrischen, radialen Polymers.

3. Verfahren nach Ansprüchen 1 und 2, wobei das Kupplungsmittel drei bis zwölf funktionelle Gruppen aufweist.

4. Verfahren nach Ansprüchen 1-3, wobei das Kupplungsmittel vier funktionelle Gruppen aufweist.

5. Verfahren nach Ansprüchen 1-4, wobei das Kupplungsmittel Siliciumtetrachlorid ist.

6. Verfahren nach Ansprüchen 1-5, wobei es sich bei den zur Bildung der Arme dienenden Polymere um Polymere, die lediglich polymerisierte konjugierte Diolefine aufweisen und um Blockcopolymere handelt, die aus mindestens einem Polymerblock aus monoalkenylsubstituiertem aromatischem Kohlenwasserstoff und mindestens einem Block aus konjugiertem Diolefin bestehen.

7. Verfahren nach Ansprüchen 1-6, wobei das Verhältnis von Armen aus konjugiertem Diolefin zu Blockcopolymerarmen im Bereich von 1:3 bis 3:1 liegt.

8. Verfahren nach Ansprüchen 1-7, wobei es sich bei den Armen aus konjugiertem Diolefin um ein Homopolymer aus einem konjugierten Diolefin handelt, das aus der Gruppe Butadien und Isopren ausgewählt ist, wobei der monoalkenylsubstituierte aromatische Kohlenwasserstoff Styrol und der Block aus konjugiertem Diolefin ein Homopolymer eines konjugierten Diolefins ist, das aus der Gruppe Butadien und Isopren ausgewählt ist.

9. Verfahren nach Ansprüchen 1-8, wobei das erste Polymer ein lebendes Polybutadien ist und das zweite Polymer aus einem Polystyrolblock und mindestens einem Polyisoprenblock besteht.

10. Asymmetrisches, radiales Polymer mit mindestens 50 Gew.-% asymmetrischer, radialer Moleküle mit dem gewünschten Verhältnis von Polymerarmen, erhältlich nach einem Verfahren, das folgende Schritte umfaßt:
(a) Kontaktierung eines ersten Polymers, das im Durchschnitt die größte Zahl an Armen ergeben soll und eine einzige reaktionsfähige Endgruppe aufweist, mit einem Kupplungsmittel mit mehreren funktionellen Gruppen, die mit der reaktionsfähigen Endgruppe reagieren, wobei die Menge dieses ersten Polymers einem Teil der Gesamtmenge an funktionellen Gruppen im wesentlichen stöchiometrisch äquivalent ist, auf solch eine Weise, daß die Reaktion zwischen dem ersten Polymer und dem Kupplungsmittel im wesentlichen zu Ende geführt wird,
(b) Kontaktierung in Folgeschritten eines oder mehrerer Polymere, die sich von dem ersten Polper und voneinander unterscheiden und die zweitgrößte Zahl von Armen ergeben sollen und eine reaktionsfähige Endgruppe aufweisen, mit dem jeweiligen Reaktionsprodukt aus jedem der vorhergehenden Schritte, bis sich alle funktionellen Gruppen des Kupplungsmittels schließlich vollständig umgesetzt haben, mit der Maßgabe, daß, wenn zwei oder mehr Arme in gleicher Zahl vorliegen sollen, diese Arme jeweils in beliebiger Reihenfolge zugegeben werden können, und
(c) Isolierung des erhaltenen asymmetrischen, radialen Polymers.

11. Asymmetrisches, radiales Polymer nach Anspruch 10, erhältlich nach einem Verfahren, das folgende Schritte umfaßt:
(a) Kontaktierung eines ersten Polymers, das im Durchschnitt die größte Zahl an Armen ergeben soll und eine einzige reaktionsfähige Endgruppe aufweist, mit einem Kupplungsmittel mit mehreren funktionellen Gruppen, die mit der reaktionsfähigen Endgruppe reagieren, wobei die Menge dieses ersten Polymers einem Teil der Gesamtmenge an funktionellen Gruppen im wesentlichen stöchiometrisch äquivalent ist, auf solch eine Weise, daß die Reaktion zwischen dem ersten Polymer und dem Kupplungsmittel im wesentlichen zu Ende geführt wird,
(b) Kontaktierung eines zweiten Polymers, das sich von dem ersten Polymer unterscheidet und die zweitgrößte Zahl von Armen ergeben soll und eine reaktionsfähige Endgruppe aufweist, mit dem Reaktionsprodukt aus Schritt (a) unter solchen Bedingungen, daß die Reaktion zwischen dem zweiten Polymer und dem Reaktionsprodukt aus Schritt (a) im wesentlichen zu Ende geführt wird, mit der Maßgabe, daß, wenn zwei oder mehr Arme in gleicher Zahl vorliegen sollen, diese Arme jeweils in beliebiger Reihenfolge zugegeben werden können, und
(c) Isolierung eines asymmetrischen, radialen Polymers.

12. Asymmetrisches, radiales Polymer nach Ansprüchen 10 und 11, dadurch erhältlich, daß man ein Kupplungsmittel mit drei bis zwölf funktionellen Gruppen verwendet.

13. Asymmetrisches, radiales Polymer nach Ansprüchen 10-12, dadurch erhältlich, daß man ein Kupplungsmittel mit vier funktionellen Gruppen verwendet.

14. Asymmetrisches, radiales Polymer nach Ansprüchen 10-13, dadurch erhältlich, daß man Siliciumtetrachlorid verwendet.

15. Asymmetrisches, radiales Polymer nach Ansprüchen 10-14, dadurch erhältlich, daß man armbildende Polymere, die lediglich polymerisierte konjugierte Diolefine und Blockcopolymere aufweisen, die aus mindestens einem Polymerblock aus monoalkenylsubstituiertem aromatischem Kohlenwasserstoff und mindestens einem Block aus konjugiertem Diolefin bestehen, verwendet.

16. Asymmetrisches, radiales Polymer nach Ansprüchen 10-15, wobei das Verhältnis von Armen aus konjugiertem Diolefin zu Blockcopolymerarmen im Bereich von 1:3 bis 3:1 liegt.

17. Asymmetrisches, radiales Polymer nach Ansprüchen 10-16, wobei es sich bei den Armen aus konjugiertem Diolefin um ein Homopolymer aus einem konjugierten Diolefin, das aus der Gruppe Butadien und Styrol ausgewählt ist, bei dem monoalkenylsubstituierten aromatischen Kohlenwasserstoff um Styrol und bei dem Block aus konjugiertem Diolefin um ein Homopolymer eines konjugierten Diolefins handelt, das aus der Gruppe Butadien und Isopren ausgewählt ist.

18. Asymmetrisches, radiales Polymer nach Ansprüchen 10-17, dadurch erhältlich, daß man das Polymer in Schritt (a) ein lebendes Polybutadien und als Polymer in Schritt (b) ein Blockcopolymer aus mindestens einem Polystyrolblock und mindestens einem Polybutadienblock verwendet.

19. Asymmetrisches, radiales Polymer nach Ansprüchen 10-18, dadurch erhältlich, daß man als erstes Polymer ein Homopolymer des Isoprens und als zweites Polymer ein Blockcopolymer aus mindestens einem Polystyrolblock und mindestens einem Polyisoprenblock verwendet.

## Revendications

1. Méthode de préparation d'un polymère radial asymétrique, caractérisée en ce qu'elle comprend les étapes consistant à :
(a) mettre en contact un premier polymère destiné, en moyenne, à fournir le plus grand nombre de bras et possédant un unique radical terminal réactif avec un agent de couplage contenant une multiplicité de radicaux fonctionnels qui réagissent avec le groupe terminal réactif, la proportion dudit premier polymère correspondant sensiblement stoechiométriquement à une partie de la quantité totale des radicaux fonctionnels, en une manière telle que la réaction entre ledit premier polymère et l'agent de couplage progresse sensiblement jusqu'à achèvement;
(b) mettre en contact, au cours d'étapes ultérieures, un ou plusieurs polymères, qui diffèrent dudit premier polymère, ainsi que les uns des autres, destinés à fournir le plus grand nombre de bras suivant et possédant un groupe terminal réactif, avec le produit de réaction respectif de chaque étape précédente, jusqu'à ce que tous les radicaux fonctionnels de l'agent de couplage aient finalement totalement réagis, avec la condition que lorsque deux ou plus de deux bras sont destinés à être présents en nombre égal, chacun de ces bras peut être ajouté en n'importe quelle suite, et
(c) récupérer le polymère radial asymétrique obtenu.

2. Méthode suivant la revendication 1, caractérisée en ce qu'elle comprend les étapes consistant à :
(a) mettre en contact un premier polymère destiné, en moyenne, à fournir le plus grand nombre de bras et possédant un unique radical terminal réactif avec un agent de couplage contenant une multiplicité de radicaux fonctionnels qui réagissent avec le groupe terminal réactif, la proportion dudit premier polymère correspondant sensiblement stoechiométriquement à une partie de la quantité totale des radicaux fonctionnels, en une manière telle que la réaction entre ledit premier polymère et l'agent de couplage progresse sensiblement jusqu'à achèvement;
(b) mettre en contact un second polymère, lequel second polymère diffère dudit premier polymère, destiné à fournir le plus grand nombre de bras suivant, possédant un groupe terminal réactif, avec le produit de réaction de l'étape (a) dans des conditions telles que la réaction entre ledit second polymère et le produit de la réaction de l'étape (a) progresse sensiblement jusqu'à son achèvement, avec la condition que lorsque deux ou plus de deux bras sont destinés à être présents en nombre égal, chacun de ces bras peut être ajouté en n'importe quelle suite, et
(c) récupérer un polymère radial asymétrique.

3. Méthode suivant l'une quelconque des revendications 1 et 2, caractérisée en ce que l'agent de couplage comprend de trois à douze groupes fonctionnels.

4. Méthode suivant l'une quelconque des revendications 1 à 3, caractérisée en ce que l'agent de couplage contient quatre groupes fonctionnels.

5. Méthode suivant l'une quelconque des revendications 1 à 4, caractérisée en ce que l'agent de couplage est le tétrachlorure de silicium.

6. Méthode suivant l'une quelconque des revendications 1 à 5, caractérisée en ce que les polymères employés pour former les bras sont des polymères qui ne contiennent seulement que des dioléfines conjuguées polymérisées et des copolymères séquencés comprenant au moins une séquence polymérique d'hydrocarbure aromatique monoalcénylique et au moins une séquence de dioléfine conjuguée.

7. Méthode suivant l'une quelconque des revendications 1 à 6, caractérisée en ce que le rapport des bras à base de dioléfine conjuguée aux bras à base de copolymère séquencé fluctue de 1:3 à 3:1.

8. Méthode suivant l'une quelconque des revendications 1 à 7, caractérisée en ce que les bras à base de dioléfine conjuguée sont constitués d'un homopolymère d'une dioléfine conjuguée choisie dans le groupe formé par le butadiène et l'isoprène, ledit hydrocarbure aromatique monoalcénylique est le styrène et la séquence de dioléfine conjuguée est constituée d'un homopolymère d'une dioléfine conjuguée choisie dans le groupe formé par le butadiène et l'isoprène.

9. Méthode suivant l'une quelconque des revendications 1 à 8, caractérisée en ce que ledit premier polymère est un polybutadiène vivant et ledit second polymère est une séquence de polystyrène et au moins une séquence de polyisoprène.

10. Polymère radial asymétrique contenant au moins 50% en poids de molécules radiales asymétriques possédant le rapport souhaité de bras polymériques incorporés, que l'on peut obtenir par mise en oeuvre d'un procédé comprenant les étapes consistant à :
(a) mettre en contact un premier polymère destiné, en moyenne, à fournir le plus grand nombre de bras et possédant un unique radical terminal réactif avec un agent de couplage contenant une multiplicité de radicaux fonctionnels qui réagissent avec le groupe terminal réactif, la proportion dudit premier polymère correspondant sensiblement stoechiométriquement à une partie de la quantité totale des radicaux fonctionnels, en une manière telle que la réaction entre ledit premier polymère et l'agent de couplage progresse sensiblement jusqu'à achèvement;
(b) mettre en contact, au cours d'étapes ultérieures, un ou plusieurs polymères, qui diffèrent dudit premier polymère, ainsi que les uns des autres, destinés à fournir le plus grand nombre de bras suivant et possédant un groupe terminal réactif, avec le produit de réaction respectif de chaque étape précédente, jusqu'à ce que tous les radicaux fonctionnels de l'agent de couplage aient finalement totalement réagis, avec la condition que lorsque deux ou plus de deux bras sont destinés à être présents en nombre égal, chacun de ces bras peut être ajouté en n'importe quelle suite, et
(c) récupérer le polymère radial asymétrique àbtenu.

11. Polymère radial asymétrique suivant la revendication 10, que l'on peut obtenir par mise en oeuvre d'une méthode comprenant les étapes consistant à :
(a) mettre en contact un premier polymère destiné, en moyenne, à fournir le plus grand nombre de bras et possédant un unique radical terminal réactif avec un agent de couplage contenant une multiplicité de radicaux fonctionnels qui réagissent avec le groupe terminal réactif, la proportion dudit premier polymère correspondant sensiblement stoechiométriquement à une partie de la quantité totale des radicaux fonctionnels, en une manière telle que la réaction entre le polymère et l'agent de couplage progresse sensiblement jusqu'à achèvement;
(b) mettre en contact un second polymère, lequel second polymère diffère dudit premier polymère, destiné à fournir le plus grand nombre de bras suivant, possédant un groupe terminal réactif, avec le produit de réaction de l'étape (a) dans des conditions telles que la réaction entre ledit second polymère et le produit de la réaction de l'étape (a) progresse sensiblement jusqu'à son achèvement, avec la condition que lorsque deux ou plus de deux bras sont destinés à être présents en nombre égal, chacun de ces bras peut être ajouté en n'importe quelle suite, et
(c) récupérer un polymère radial asymétrique.

12. Polymère radial asymétrique suivant l'une quelconque des revendications 10 et 11, que l'on peut obtenir par l'emploi d'un agent de couplage, comprenant de trois à douze radicaux fonctionnels.

13. Polymère radial asymétrique suivant l'une quelconque des revendications 10 à 12, que l'on peut obtenir par l'emploi d'un agent de couplage contenant quatre radicaux fonctionnels.

14. Polymère radial asymétrique suivant l'une quelconque des revendications 10 à 13, que l'on peut obtenir par l'emploi du tétrachlorure de silicium.

15. Polymère radial asymétrique suivant l'une quelconque des revendications 10 à 14, que l'on peut obtenir par l'emploi de polymères formant des bras, qui ne contiennent uniquement que des dioléfines conjuguées polymérisées et des copolymères séquencés comprenant au moins une séquence polymérique d'hydrocarbure aromatique monoalcénylique et au moins une séquence de dioléfine conjuguée.

16. Polymère radial asymétrique suivant l'une quelconque des revendications 10 à 15, caractérisé en ce que le rapport des bras à base de dioléfine conjuguée aux bras à base de copolymère séquence fluctue de 1:3 à 3:1.

17. Polymère radial asymétrique suivant l'une quelconque des revendications 10 à 16, caractérisé en ce que les bras à base de dioléfine conjuguée sont constitués d'un homopolymère d'une dioléfine conjuguée, choisie dans le groupe formé par le butadiène et le styrène, ledit hydrocarbure aromatique monoalcénylique est le styrène et la séquence à base de dioléfine conjuguée est constituée par un homopolymère d'une dioléfine conjuguée choisie dans le groupe formé par le butadiène et l'isoprène.

18. Polymère radial asymétrique suivant l'une quelconque des revendications 10 à 17, que l'on peut obtenir par l'emploi, à titre de polymère au cours de l'étape (a) d'un polybutadiène vivant et, à titre de polymère au cours de l'étape (b), d'un copolymère séquencé comprenant au moins une séquence de polystyrène et au moins une séquence de polybutadiène.

19. Polymère radial asymétrique suivant l'une quelconque des revendications 10 à 18, que l'on peut obtenir par l'emploi d'un homopolymère de l'isoprène à titre de premier polymère et d'un copolymère séquencé comprenant au moins une séquence de polystyrène et au moins une séquence de polyisoprène à titre de second polymère.
